# EUROPEAN PATENT SPECIFICATION

(11) **EP 4 435 888 B1**
(45) Date of publication and mention of the grant of the patent: **09.09.2026**
(21) Application number: 23883120.0
(22) Date of filing: 26.10.2023
(51) Int. Cl.: H01M 4/136, H01M 4/58, H01M 4/62, H01M 10/052, H01M 4/02, H01M 4/13, H01M 4/131, H01M 4/1397, H01M 4/36, H01M 4/525, H01M 10/0525

(54) **CATHODE AND LITHIUM SECONDARY BATTERY MANUFACTURED USING SAME**
KATHODE UND DAMIT HERGESTELLTE LITHIUMSEKUNDÄRBATTERIE
CATHODE ET BATTERIE SECONDAIRE AU LITHIUM FABRIQUÉE À L'AIDE DE CELLE-CI

(30) Priority: 26.10.2022 KR 20220139726; 25.10.2023 KR 20230143944
(43) Date of publication of application: 25.09.2024
(73) Proprietor: LG Energy Solution, Ltd., Seoul 07335 (KR)
(72) Inventor: KIM, Dong Hyun, Daejeon 34122 (KR); YOO, Houng Sik, Daejeon 34122 (KR); LEE, Jong Won, Daejeon 34122 (KR); YOON, Ji Hee, Daejeon 34122 (KR); YANG, Gui Eum, Daejeon 34122 (KR); CHOY, Sang Hoon, Daejeon 34122 (KR); CHOI, Hyeon, Daejeon 34122 (KR); KWON, O Jong, Daejeon 34122 (KR); KANG, Yong Hee, Daejeon 34122 (KR)
(74) Representative: Plasseraud IP
(86) International application number: PCT/KR2023/016734
(87) International publication number: WO 2024/091015

(56) References cited:
- EP-A1- 3 358 651
- WO-A1-2022/191645
- JP-A- 2017 069 195
- KR-A- 20160 146 580
- KR-A- 20180 107 759
- KR-A- 20200 142 340
- KR-A- 20220 128 304

## Description

### [Technical Field]

This application claims the benefit of priority to Korean Patent Application No. 10-2022-0139726, filed on Oct. 26, 2022, and Korean Patent Application No. 10-2023-0143944, filed on Oct. 25, 2023.

The present invention relates to a positive electrode and a lithium secondary battery manufactured using the same, and more particularly to a high-loading positive electrode having excellent flexibility and adhesion and a lithium secondary battery including the same.

### [Background Technology of the Invention]

As technology development and demand for electric vehicles and energy storage systems (ESS) increases, the demand for batteries as an energy source is rapidly increasing, and research is being conducted on batteries that can meet various needs. In particular, lithium secondary batteries, which have high energy density and excellent life and cycle characteristics, are being actively researched as a power source for these devices.

Lithium cobalt oxide (LCO), lithium nickel cobalt manganese oxide (LNCMO), and lithium iron phosphate (LFP) are used as positive electrode active materials in lithium secondary batteries.

Lithium iron phosphate is low-cost because it contains iron, which is a resource-rich and low-cost material. In addition, the low toxicity of lithium iron phosphate reduces the environmental impact of using lithium iron phosphate. Furthermore, because lithium iron phosphate has an olivine structure, its active material structure can remain stable at high temperatures compared to lithium transition metal oxide, which has a layered structure. Therefore, it has the advantage of excellent high temperature stability and high temperature life characteristics of the battery.

However, compared to lithium transition metal oxides such as lithium nickel cobalt manganese oxide, lithium iron phosphate suffers from poor lithium mobility and low electrical conductivity. Therefore, in the past, lithium iron phosphate with a small average particle diameter was used to form a short lithium migration path, the surface of lithium iron phosphate was coated with carbon to improve electrical conductivity, and an excessive amount of conductive material was used.

However, as the particle size of the lithium iron phosphate particles decreases, the specific surface area increases, and the lithium iron phosphate with a carbon-coated surface has poor solvent wetting ability. As a result, the particle agglomeration of lithium iron phosphate is severe, which reduces the stability of the positive electrode slurry and the coating processability, and the binder cannot be effectively mixed with the lithium iron phosphate, thereby reducing the adhesion between the positive electrode current collector and the positive electrode active material layer (hereinafter referred to as the positive electrode adhesion) in the manufactured positive electrode. This phenomenon can be exacerbated in a high-loading positive electrode.

If the positive electrode adhesion deteriorates, deintercalation of the positive electrode active material layer occurs during electrode manufacturing or charge/discharge, which increases the battery resistance and reduces the capacity of the secondary battery.

Korean Public Patent No. 10-2020-0008066 discloses a binder composition for a secondary battery electrode including a copolymer comprising an alkylene structural unit and a nitrile group-containing monomer unit, and having a predetermined Mooney viscosity, in order to disperse the conductive material in a good manner, but when applied to a positive electrode using lithium iron phosphate as the positive electrode active material, it was not satisfactory in terms of improving adhesion and flexibility.

Therefore, there is a need for technologies to improve positive electrode adhesion and flexibility in a high-loading positive electrode including lithium iron phosphate.

WO 2022/191645 A1 discloses an electrode and manufacturing method therefor. EP 3 358 651 A1 discloses a conductive material paste composition for secondary battery electrodes, slurry composition for secondary battery electrodes, undercoat layer - including current collector for secondary battery electrode, electrode for secondary batteries, and secondary battery.

### [Description of the Invention]

### [Technical Problem]

The present invention aims to provide a positive electrode including lithium iron phosphate as a positive electrode active material, a positive electrode that can improve adhesion between a positive electrode current collector and a positive electrode active material layer, improve flexibility of the positive electrode, thereby preventing electrode deintercalation, reducing battery resistance, and improving battery capacity, and to provide a lithium secondary battery.

### [Technical Solution]

According to one embodiment of the present invention, a positive electrode is provided. The positive electrode includes: a current collector; a first positive electrode active material layer formed on the current collector; and a second positive electrode active material layer formed on the first positive electrode active material layer, wherein the first positive electrode active material layer and the second positive electrode active material layer each comprise lithium iron phosphate, a fluorine-based binder, a rubber-based binder, and a conductive material, wherein the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 130,000 g/mol or more, and the ratio (P2/P1) of the weight P2 of fluorine contained in the second positive electrode active material layer to the weight P1 of fluorine contained in the first positive electrode active material layer is 1 or less.

In an exemplary embodiment, the ratio (P2/P1) of the weight P2 of fluorine contained in the second positive electrode active material layer to the weight P1 of fluorine contained in the first positive electrode active material layer is from 0.5 to 1.

In an exemplary embodiment, the first positive electrode active material layer includes 0.9 wt% or less of the second hydrogenated nitrile butadiene rubber, based on the weight of the first positive electrode active material layer.

In an exemplary embodiment, the weight ratio of the fluorine-based binder to the second hydrogenated nitrile butadiene rubber included in the first positive electrode active material layer is 90:10 to 75:25, and
the weight ratio of the fluorine-based binder to the second hydrogenated nitrile butadiene rubber included in the second positive electrode active material layer is 80:20 to 60:40.

In an exemplary embodiment, the first positive electrode active material layer, based on a weight of the first positive electrode active material layer, includes
93.5 to 97.99 wt% of the lithium iron phosphate;
1.5 to 3.0 wt% of the fluorine-based binder;
0.01 to 0.7 wt.% of the first hydrogenated nitrile butadiene rubber;
0.2 to 0.8 wt% of the second hydrogenated nitrile butadiene rubber;
0.3 to 2.0 wt% of the conductive material.

In an exemplary embodiment, the second positive electrode active material layer, based on a weight of the second positive electrode active material layer, includes
94.2 to 98.49 wt% of the lithium iron phosphate;
0.9 to 2.2 wt% of the fluorine-based binder;
0.01 to 0.7 wt.% of the first hydrogenated nitrile butadiene rubber;
0.3 to 0.9 wt% of the second hydrogenated nitrile butadiene rubber;
0.3 to 2.0 wt% of the conductive material.

In an exemplary embodiment, the second hydrogenated nitrile butadiene rubber has a weight average molecular weight (Mw) of 150,000 g/mol to 1,000,000 g/mol.

In an exemplary embodiment, the fluorine-based binder included in the first positive electrode active material layer and the fluorine-based binder included in the second positive electrode active material layer are the same compound.

In an exemplary embodiment, the ratio (=H2/H1) of the wt% (H2) of the second hydrogenated nitrile butadiene rubber included in the second positive electrode active material layer to the wt% (H1) of the second hydrogenated nitrile butadiene rubber included in the first positive electrode active material layer is from 1 to 3.

In an exemplary embodiment, the lithium iron phosphate is a compound represented by the Chemical Formula 1 below.

[Chemical Formula 1] Li₁₊ₐFe₁₋ₓMₓ(PO_{4-b})X_{b}

(In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively)

In an exemplary embodiment, the conductive material is a carbon nanotube.

In an exemplary embodiment, the ratio (C2/C1) of the wt% C2 of the conductive material included in the second positive electrode active layer to the wt% C1 of the conductive material included in the first positive electrode active layer is from 0.5 to 2.

In an exemplary embodiment, the sum of the loading amounts of the first positive electrode active material layer and the second positive electrode active material layer ranges from 400 mg/25 cm² to 700 mg/25 cm².

A positive electrode according to an exemplary embodiment has a positive electrode adhesion that is greater than or equal to 22 gf/20 mm as measured in an adhesion test in which the first positive electrode active material layer is exfoliated at 90° from an aluminum thin film.

In a positive electrode according to an exemplary embodiment, in a flexibility test in which a phi-specific measuring rod is contacted on the positive electrode active material layer and a cross-section of the positive electrode is lifted, cracks occur in measuring rods of 5 phi (ø) or less.

According to another exemplary embodiment of the present invention, a lithium secondary battery including the positive electrode is provided.

### [Advantageous Effects]

A positive electrode according to the present invention, wherein the positive electrode includes a plurality of layers, each layer having a fluorine-based binder as a binder, and a first hydrogenated nitrile butadiene rubber and a second hydrogenated nitrile butadiene rubber having a weight average molecular weight in a different range. By controlling the ratio (P2/P1) of the weight P2 of fluorine contained in the second positive electrode active material layer to the weight P1 of fluorine contained in the first positive electrode active material layer to 1 or less, it is possible to have excellent positive electrode adhesion and flexibility even with a small binder content compared to a conventional single-layer positive electrode.

### [Detailed Description]

The advantages and features of the present invention, and methods of achieving them, will become apparent with reference to the embodiments described in detail with reference to the accompanying drawings. However, the present invention is not limited to the embodiments disclosed herein and may be implemented in many different forms, and these embodiments are provided merely to make the disclosure of the present invention complete and to fully disclose the scope of the present invention to those having ordinary knowledge in the technical field to which it belongs, and the present invention is defined by the scope of the claims. Throughout the specification, like reference numerals refer to like components.

Unless otherwise defined, all terms used herein (including technical and scientific terms) are intended to be used in the sense in which they would be understood by one of ordinary skill in the art to which the present invention belongs, and the terms defined in a dictionary that is commonly used are not to be construed as ideal or excessive unless expressly and specifically defined.

The terms used herein is intended to describe embodiments and is not intended to limit the present invention. In this specification, the singular includes the plural unless the context otherwise mentions. The words "comprises" and/or "comprising" as used in the specification do not exclude the presence or addition of one or more other components in addition to those mentioned.

In this specification, whenever any part is said to include any component, it is not meant to exclude any other component, but rather to include additional components, unless specifically stated to the contrary.

In this specification, descriptions of "A and/or B" mean A, or B, or A and B.

In this specification, "%" means wt% unless otherwise indicated.

In this specification, D₅₀ refers to a particle diameter in the particle diameter distribution curve that corresponds to 50% of the volume accumulation. The D₅₀ can be measured, for example, using a laser diffraction method. The laser diffraction method is generally capable of measuring particle diameters from the submicron region down to several millimeters and can yield highly reproducible and highly resolvable results.

In this specification, "specific surface area" is measured by the BET method, which can be calculated from the amount of nitrogen gas adsorption at liquid nitrogen temperature (77 K) using BEL Japan's BELSORP-mino II.

In this specification, "Mw" refers to the weight average molecular weight of a standard polystyrene measured by Gel Permeation Chromatography (GPC). Specifically, the Mw is a conversion of the value measured by GPC under the following conditions, and standard polystyrene from the Agilent system was used for calibration.

### <Measurement conditions>

Measuring instrument: Agilent GPC (Agulent 1200 series, USA)
Column: Two PL Mixed B connected
Column temperature: 40 °C
Eluent: Tetrahydrofuran
Flow rate: 1.0 mL/min
Concentration: ~1 mg/mL (100 µL injection)

In the present disclosure, positive electrode adhesion may be measured in the following manner. A positive electrode cut to a length of 150 mm and a width of 20 mm is prepared, and the positive electrode active material layer is placed to face a slide glass of length 75 mm and width 25 mm, and the positive electrode is attached to the slide glass in the longitudinal direction with double-sided tape. That is, the slide glass is attached to an area corresponding to half of the longitudinal direction of the positive electrode. Then, an evaluation sample is prepared by rubbing the roller 10 times so that the double-sided tape is uniformly attached. Next, the slide glass part of the evaluation sample is fixed to the sample stage of the Universal Testing Machine (UTM) (LS5, AMETEK), and the positive electrode half without the slide glass attached is connected to the load cell of the UTM machine. The load cell is moved at a speed of 100 mm/min by applying force at a 90° to 50 mm, and the load applied to the load cell is measured. Here, the average of the loads is measured in the 20 mm to 40 mm section of the travel, which is repeated five times, and its the average value is evaluated as the positive electrode adhesion (gf/20 mm) for each sample.

In this specification, positive electrode flexibility may be measured in the following manner. A measuring rod for each phi (ø) is manufactured, and a positive electrode with a loading amount of 600 mg/25 cm² is cut to a length of 30 cm and a width of 10 cm. The cut positive electrode is bent in half to touch the measuring rod, and both ends of the positive electrode is lifted at a speed of 10 mm per minute. Here, it is lifted until the force measured on the Universal Testing Machine (UTM) is 5N. Each phi is measured to observe the electrode under an optical microscope for cracks, and if there are no cracks, the test is proceeded with a smaller phi.

Hereinafter, the present invention will be described in detail.

### Positive electrode

A positive electrode for lithium secondary battery according to the present invention will be described.

A positive electrode according to an exemplary embodiment of the present invention includes: a current collector; a first positive electrode active material layer formed on the current collector; and a second positive electrode active material layer formed on the first positive electrode active material layer, wherein the first positive electrode active material layer and the second positive electrode active material layer each comprise lithium iron phosphate, a fluorine-based binder, a rubber-based binder, and a conductive material, wherein the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 130,000 g/mol or more, and the ratio (P2/P1) of the weight P2 of fluorine contained in the second positive electrode active material layer to the weight P1 of fluorine contained in the first positive electrode active material layer is 1 or less.

Because lithium iron phosphate has poor lithium mobility and low electrical conductivity compared to lithium transition metal oxides such as lithium nickel cobalt manganese oxide, lithium iron phosphate with a small average particle diameter is often used as a positive electrode active material. However, the small size of lithium iron phosphate particles increases the specific surface area, which leads to severe particle agglomeration, which prevents the effective mixing of lithium iron phosphate with the binder, thus reducing the positive electrode adhesion. As a result, deintercalation of the positive electrode active material layer occurs during electrode manufacturing or charging and discharging, increasing the battery resistance and reducing the capacity of the secondary battery.

The present inventors have conducted researches to solve these problems and have discovered that when the positive electrode active material layer is composed of two layers, and the binder included in each layer includes all of a fluorine-based binder, the first hydrogenated nitrile butadiene rubber and the second hydrogenated nitrile butadiene rubber, wherein when the ratio (P2/P1) of the weight P2 of fluorine contained in the second positive electrode active material layer to the weight P1 of fluorine contained in the first positive electrode active material layer is 1 or less, the interfacial adhesion between the current collector and the first positive electrode active material layer is dramatically increased, the flexibility of the entire positive electrode active material layer is improved, and the resistance of the positive electrode is reduced, thereby completing the present invention.

The positive electrode according to one embodiment of the present invention has a structure in which the positive electrode active material layer is in direct contact with the positive electrode current collector, due to the excellent interfacial adhesion between the positive electrode active material layer and the positive electrode current collector, and may not include a separate layer for improving adhesion between the positive electrode active material layer and the positive electrode current collector. In other words, the positive electrode according to one embodiment of the present invention may exhibit excellent interfacial adhesion between the positive electrode current collector and the positive electrode active material layer without including a separate layer, such as a bonding layer or an adhesive layer or a bonding layer or a primer coating layer, which may be interposed to improve adhesion.

The positive electrode of the present invention will be described in detail.

A positive electrode according to one embodiment of the present invention may include a positive electrode active material layer. Specifically, a positive electrode according to the present invention may include a positive electrode current collector; a first positive electrode active material layer formed on the current collector; and a second positive electrode active material layer formed on the first positive electrode active material layer. In this case, the first positive electrode active material layer and the second positive electrode active material layer may be formed on one or both sides of the current collector.

The positive electrode current collector can be, but is not limited to, any one that has conductivity and does not cause chemical changes in the battery. For example, stainless steel, aluminum, nickel, titanium, calcined carbon, or those that are surface treated with carbon, nickel, titanium, silver, or the like to a surface of aluminum or stainless steel may be used as the current collector.

The positive electrode current collector may have a thickness of 3 µm to 500 µm, and microscopic irregularities may also be formed on the surface of the positive electrode current collector to increase adhesion to the positive electrode active material layer. For example, it can be used in various forms, such as films, sheets, foils, nets, porous materials, foams, non-woven fabrics, etc.

The first positive electrode active material layer and the second positive electrode active material layer may each include a positive electrode active material. Additionally, the first and second positive electrode active material layers may further include a conductive material, a binder, and a dispersant, as desired, in addition to the positive electrode active material.

Below, each of the compositions contained in the positive electrode active material layer is described in detail.

### (1) Positive electrode active material

The present invention includes lithium iron phosphate as the positive electrode active material. Since lithium iron phosphate has an olivine structure, the active material structure remains stable at high temperatures compared to lithium transition metal oxide with a layered structure. As a result, when lithium iron phosphate is used as the positive electrode active material, the high temperature stability and high temperature life characteristics of the positive electrode can be significantly improved, thereby reducing the risk of ignition and the like of the lithium secondary battery including the positive electrode.
The lithium iron phosphate may be a compound of the Chemical Formula 1 below.

[Chemical Formula 1] Li₁₊ₐFe₁₋ₓMₓ(PO_{4-b})X_{b}

(In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively)

For example, the lithium iron phosphate may be LiFePO₄.

The lithium iron phosphate may be a secondary particle in which the primary particles are agglomerated together, preferably having a monolith structure composed of primary particles.

In the context of the present invention, the term "monolith structure" refers to a structure in which the particles exist as independent phases that are not mutually agglomerated to a morphology shape. As a particle structure in contrast to such a monolith structure, a structure in which smaller particles ("primary particles") are physically and/or chemically aggregated to form relatively larger particles ("secondary particles") may be exemplified.

When the lithium iron phosphate has a monolith structure consisting of primary particles, the possibility of cracking of the lithium iron phosphate particles during the rolling process is smaller than when the lithium iron phosphate particles are secondary particles, and thus the capacity reduction due to deintercalation of the cracked particles is less, which is desirable. In addition, when the lithium iron phosphate is a primary particle with a monolith structure, the migration of the binder can be mitigated during the drying process of the positive electrode slurry, which may be desirable in terms of interfacial adhesion between the positive electrode current collector and the positive electrode active material layer.

The lithium iron phosphate may include a carbon coating layer on its surface. When a carbon coating layer is formed on the surface of the lithium iron phosphate, the electrical conductivity is enhanced, which can improve the resistance characteristics of the positive electrode.

The carbon coating layer may be formed using at least one raw material selected from the group consisting of glucose, sucrose, lactose, starch, oligosaccharides, polyoligosaccharides, fructose, cellulose, polymers of furfuryl alcohol, block copolymers of ethylene and ethylene oxide, vinyl-based resins, cellulose-based resins, phenolic resins, pitch-based resins, and tar-based resins. Specifically, the carbon coating layer may be formed by mixing the raw material with the lithium iron phosphate followed by heat treatment.

The average particle diameter D₅₀ of the lithium iron phosphate may be from 0.8 µm to 20.0 µm, more particularly from 0.9 µm to 10.0 µm, and more particularly from 0.9 µm to 3.0 µm. When the average particle diameter D₅₀ of the positive electrode active material satisfies the above range, the mobility of the lithium in the lithium iron phosphate can be improved, thereby improving the charge and discharge characteristics of the battery.

The BET specific surface area of lithium iron phosphate may be from 5 m²/g to 20 m²/g, more specifically from 7 m²/g to 18 m²/g, more specifically from 9 m²/g to 16 m²/g. The above ranges correspond to lower values compared to conventional lithium iron phosphate. When the range is satisfied, the aggregation of the lithium iron phosphate can be effectively suppressed even in a positive electrode slurry composition having a relatively low dispersant content.

In one embodiment, the first positive electrode active material layer may include from 93.5 to 97.99 wt%, more specifically from 94 to 97.5 wt%, more specifically from 94.4 to 97 wt%, of the lithium iron phosphate, based on the weight of the first positive electrode active material layer.

In one embodiment, the second positive electrode active material layer may include 94.2 to 98.49 wt%, more specifically 94.5 to 98 wt%, more specifically 95 to 97.5 wt%, of the lithium iron phosphate, based on the weight of the second positive electrode active material layer.

When the content of lithium iron phosphate satisfies the above range, the battery capacity of the positive electrode can be improved by securing sufficient positive electrode energy density.

### (2) Binder

As a binder, the first positive electrode active material layer and the second positive electrode active material layer include both fluorine-based binder and rubber-based binder, respectively, wherein the rubber-based binder includes a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 130,000 g/mol or more.

In this case, the content (wt%) of the fluorine-based binder included in the first positive electrode active material layer of the lower layer is equal to or greater than the content (wt%) of the fluorine-based binder included in the second positive electrode active material layer of the upper layer, so that the ratio (P2/P1) of the weight P2 of fluorine contained in the second positive electrode active material layer to the weight P1 of fluorine contained in the first positive electrode active material layer is 1 or less, preferably 0.5 to 1, and more preferably 0.52 to 0.95. If the ratio (P2/P1) of P2 to P1 exceeds 1, it is undesirable in terms of adhesion.

That the weight P1 of fluorine contained in the first positive electrode active material layer and the weight P2 of fluorine contained in the second positive electrode active material layer satisfy the above ratio range is due to the difference in the content of the fluorine-based binder contained in the first and second positive electrode active material layers, respectively.

That is, the fluorine-based binder contains a fluorine element, and the lithium iron phosphate, the first and second hydrogenated nitrile butadiene rubbers, and the conductive material constituting the positive electrode of the present invention do not contain a fluorine element, so that the weight of the fluorine contained in the first positive electrode active material layer and the second positive electrode active material layer is proportional to the content (weight) of the fluorine-based binder contained in the first positive electrode active material layer and the second positive electrode active material layer, respectively.

The fluorine-based binder included in the first positive electrode active material layer and the fluorine-based binder included in the second positive electrode active material layer may be the same compound having the same weight average molecular weight and chemical formula.

The fluorine-based binder includes a PVDF-based polymer including vinylidene fluoride (VDF) as a monomer. Specific examples of the PVDF-based polymers include PVDF homopolymers, PVDF-HFP (Poly(vinylidene fluoride-co-hexafluoropropylene)), PVDF-CTFE (Poly(vinylidene fluoride-co-chlorotrifluoroethylene)), PVDF-TFE (Poly(vinylidene tetrafluoroethylene)), PVDF-TrFE (Poly(vinylidene trifluoroethylene)), and the like.

In one specific example, the fluorine-based binder may be included in the positive electrode active material layer in an amount of 1.5 wt% to 3.0 wt%, preferably from 1.6 wt% to 2.7 wt%, more preferably from 1.7 wt% to 2.5 wt%, based on the weight of the first positive electrode active material layer. In the second positive electrode active material layer, the fluorine-based binder may be included in an amount of 0.9 wt% to 2.2 wt%, preferably from 1.0 wt% to 2.1 wt%, more preferably from 1.2 wt% to 2.0 wt% based on the weight of the second positive electrode active material layer.

Further, within the total positive electrode active material layer including the first positive electrode active material layer and the second positive electrode active material layer, the fluorine-based binder may be included in an amount of 1.2 wt% to 2.6 wt%, preferably from 1.4 wt% to 2.4 wt%, more preferably from 1.6 wt% to 2.2 wt%.

When the content of the fluorine-based binder is in the above range, the viscosity and coating stability of the slurry for the positive electrode are excellent, while the effect of improving adhesion and flexibility of the positive electrode can be doubled.

The weight average molecular weight (Mw) of the fluorine-based binder may be from 300,000 to 2,000,000, preferably from 400,000 to 1,500,000, and most preferably from 500,000 to 1,300,000. When the weight average molecular weight of the fluorine-based binder meets the above numerical range, the viscosity of the positive electrode slurry can easily be in a desirable range, and positive electrode adhesion can be maximized with a low content range.

Fluorine-based binder is commonly used as binders for electrodes due to their excellent adhesion and chemical stability to electrolyte, but due to their crystal structure, including fluorine-based binders more than necessary can negatively affect the flexibility of the positive electrode. On the other hand, the higher the binder content, the higher the adhesion of the positive electrode, so improving the adhesion and flexibility of the positive electrode has been a difficult task to achieve by simply adjusting the binder content. In addition, high-loading positive electrode with a loading amount of 600 mg/25 cm² or more of the positive electrode active material layer tend to be less flexible than low-loading positive electrode with the same binder content but a smaller loading amount, so improving the adhesion and flexibility in high-loading positive electrode have been an even more difficult technical challenge.

Accordingly, the positive electrode according to the present invention includes, in addition to the fluorine-based binder, a rubber-based binder, wherein the rubber-based binder includes a first hydrogenated nitrile butadiene rubber having a weight average molecular weight (Mw) of 10,000 g/mol to 100,000 g/mol and a second hydrogenated nitrile butadiene rubber having a weight average molecular weight (Mw) of 130,000 g/mol or more.

The first hydrogenated nitrile butadiene rubber not only improves the adhesion and flexibility of the positive electrode, but also improves the dispersibility of the positive electrode slurry, thereby inhibiting the agglomeration of the conductive material and the positive electrode active material. The inventors of the present invention found that when the positive electrode includes only the first hydrogenated nitrile butadiene rubber as a rubber-based binder, the adhesion and flexibility of the positive electrode can no longer be improved above a certain content, but when the positive electrode includes the second hydrogenated nitrile butadiene rubber together with the first hydrogenated nitrile butadiene rubber, the flexibility and adhesion of the positive electrode are dramatically increased. Accordingly, the positive electrode according to the present invention has both excellent flexibility and adhesion, and due to the improved flexibility when the loading amount of the positive electrode is increased, it has excellent rolling performance. Furthermore, the improved flexibility contributes to the prevention of deintercalation of the active material layer of the positive electrode upon physical impact outside the positive electrode.

The first and second hydrogenated nitrile butadiene rubber (HNBR) means, respectively, that nitrile butadiene rubber (NBR) is subjected to a hydrogenation reaction such that the double bonds originally contained in the nitrile butadiene rubber (NBR) become single bonds.

The hydrogenated nitrile butadiene rubber may have a repeating unit content of acrylonitrile (AN) derivatives from 20 wt% to 50 wt%, more preferably from 25 wt% to 45 wt%, and most preferably from 30 wt% to 40 wt%, based on its total weight.

The rubber-based binder of the present invention includes a first hydrogenated nitrile butadiene rubber and a second hydrogenated nitrile butadiene rubber having different weight average molecular weight ranges.

The first hydrogenated nitrile butadiene rubber may have the weight average molecular weight (Mw) from 10,000 g/mol to 100,000 g/mol, preferably from 10,000 g/mol to 80,000g/mol, more preferably from 10,000 g/mol to 50,000g/mol, to improve the solvent wetting and dispersibility of the lithium iron phosphate particles, thereby inhibiting particle aggregation of the lithium iron phosphate.

Furthermore, the first hydrogenated nitrile butadiene rubber improves the positive electrode conductive network by inhibiting agglomeration of the conductive material, and by agglomerating the conductive material in a spherical rather than linear manner, the specific surface area of the agglomerated conductive material is minimized compared to when the conductive material is linearly agglomerated. As a result, the surface area of the positive electrode active material adjacent to the agglomerated conductive material that cannot participate in the lithium intercalation/deintercalation reaction is minimized, thereby lowering the discharge resistance of the lithium secondary battery.

The weight average molecular weight (Mw) of the second hydrogenated nitrile butadiene rubber is at least 130,000 g/mol, preferably from 150,000 g/mol to 1,000,000 g/mol, more preferably from 200,000 g/mol to 500,000 g/mol. When the weight average molecular weight (Mw) of the second hydrogenated nitrile butadiene rubber is 130,000 g/mol or more, the adhesion and flexibility of the positive electrode active material layer can be improved, so that the rolling density of the positive electrode can be increased, and as the rolling density increases, it can have an effect of decreasing positive electrode resistance.

In one specific example, the first hydrogenated nitrile butadiene rubber may be included in the first positive electrode active material layer from 0.01 wt% to 0.7 wt%, preferably from 0.05 wt% to 0.6 wt%, more preferably from 0.1 wt% to 0.5 wt%. And, the first hydrogenated nitrile butadiene rubber may also be included in the second positive electrode active material layer, in the above numerical range.

When the content of the first hydrogenated nitrile butadiene rubber is in the above range, the positive electrode slurry can have a viscosity suitable for coating, and the dispersibility of the lithium iron phosphate, the conductive material, and the binder in the positive electrode slurry is good.

In one specific example, the second hydrogenated nitrile butadiene rubber is included in the first positive electrode active material layer in an amount of no more than 0.9 wt%, preferably 0.2 to 0.8 wt%, more preferably 0.3 to 0.6 wt%, based on the weight of the first positive electrode active material layer. Further, the second hydrogenated nitrile butadiene rubber is included in the second positive electrode active material layer in an amount of not more than 0.9 wt%, preferably 0.3 to 0.9 wt%, more preferably 0.5 to 0.8 wt%, based on the weight of the second positive electrode active material layer.

Further, in the total positive electrode active material layer including the first positive electrode active material layer and the second positive electrode active material layer, the total wt% of the second hydrogenated nitrile butadiene rubber may be 0.9 wt% or less, preferably 0.25 wt% to 0.85 wt%, more preferably 0.35 wt% to 0.75 wt%, and most preferably 0.4 wt% to 0.65 wt%.

If the second hydrogenated nitrile butadiene rubber is included in excessive amounts outside the above range, it will act synergistically with the fluorine-based binder to dramatically increase the viscosity of the positive electrode slurry, resulting in poor coating properties. As a result, the positive electrode may be impossible to manufacture. In addition, if the second hydrogenated nitrile butadiene rubber is included too little outside the above range, the effect of improving the flexibility and adhesion of the positive electrode may be small. Therefore, the second hydrogenated nitrile butadiene rubber is preferably included in the above range.

In one specific example, the ratio (=H2/H1) of the wt% (H2) of the second hydrogenated nitrile butadiene rubber included in the second positive electrode active material layer to the wt% (H1) of the second hydrogenated nitrile butadiene rubber included in the first positive electrode active material layer may be 1 to 3, preferably 1 to 2.9, more preferably 1.1 to 2.8. Here, the wt% may be a weight percentage of the second hydrogenated nitrile butadiene rubber included in the first positive electrode active material layer, based on 100 parts by weight of the first positive electrode active material layer, and a weight percentage of the second hydrogenated nitrile butadiene rubber included in the second positive electrode active material layer, based on 100 parts by weight of the second positive electrode active material layer.

If the ratio (=H2/H1) of the wt% (H2) of the second hydrogenated nitrile butadiene rubber included in the second positive electrode active material layer to the wt% (H1) of the second hydrogenated nitrile butadiene rubber included in the first positive electrode active material layer exceeds 3, it results in too much second hydrogenated nitrile butadiene rubber being included in the second positive electrode active material layer, which is undesirable because the viscosity of the slurry for the second positive electrode active material layer may increase, resulting in a decrease in coating performance, and conversely, if the ratio is less than 1, too little nitrile butadiene rubber is included in the second positive electrode active material layer, resulting in a decrease in the flexibility of the entire positive electrode.

The first hydrogenated nitrile butadiene rubber included in the first positive electrode active material layer and the first hydrogenated nitrile butadiene rubber included in the second positive electrode active material layer may be the same compound, and have the same weight average molecular weight and chemical formula.

Furthermore, the second hydrogenated nitrile butadiene rubber included in the first positive electrode active material layer and the second hydrogenated nitrile butadiene rubber included in the second positive electrode active material layer may be the same compound and have the same weight average molecular weight and chemical formula.

In one specific example, the weight ratio of the fluorine-based binder and the second hydrogenated nitrile butadiene rubber included in the first positive electrode active material layer may be 90:10 to 75:25, preferably 8:1 to 4:1, and even more preferably 7:1 to 4:1. When the weight ratio of the fluorine-based binder and the second hydrogenated nitrile butadiene rubber included in the first positive electrode active material layer satisfies the above numerical range, the coating stability of the slurry can be excellent, while the interfacial adhesion between the current collector and the first positive electrode active material layer can be excellent.

The weight ratio of the fluorine-based binder and the second hydrogenated nitrile butadiene rubber included in the second positive electrode active material layer may be 80:20 to 60:40, and preferably 75:25 to 60:40. When the weight ratio of the fluorine-based binder and the second hydrogenated nitrile butadiene rubber included in the second positive electrode active material layer satisfies the above numerical range, the coating stability of the slurry can be excellent, while the flexibility of the positive electrode can be excellent.

Further, the sum of the fluorine-based binder, the first hydrogenated nitrile butadiene rubber, and the second hydrogenated nitrile butadiene rubber included in the first positive electrode active material layer and the second positive electrode active material layer may be from 1.8 wt% to 3.3 wt%, based on the total of the positive electrode active material layers.

### (3) Conductive material

Each of the first positive electrode active material layer and the second positive electrode active material layer of the present invention includes a conductive material.

The conductive material is not particularly limited as long as it is conductive without causing chemical changes in the battery, for example, graphite; carbon black such as carbon black, acetylene black, ketjen black, channel black, furnace black, lamp black, thermal black, etc.; conductive fibers such as carbon fibers or metal fibers; metal powders such as carbon fluoride, aluminum, nickel powder; conductive whiskers such as zinc oxide, potassium titanate, etc.; conductive metal oxides such as titanium oxide; conductive materials such as polyphenylene derivatives; and the like may be used. Specific examples of commercially available conductive materials include acetylene black-based products from Chevron Chemical Company, Denka Singapore Private Limited, or Gulf Oil Company, etc., Ketjenblack, EC series (Armak Company product), Vulcan XC-72 (Cabot Company product), and Super P (Timcal product). Preferably, the conductive material may be carbon nanotubes. The conductive network of carbon nanotubes is preferred as a conductive material included in the positive electrode of the present invention because it can alleviate the phenomenon of migration of the binder during the drying process of the positive electrode slurry.

In one specific example, the first positive electrode active material layer may include 0.3 to 2.0 wt%, more particularly 0.6 to 1.5 wt%, more particularly 0.8 to 1.3 wt%, of the conductive material, based on the weight of the first positive electrode active material layer. In addition, the second positive electrode active material layer may include 0.3 to 2.0 wt%, more particularly 0.6 wt% to 1.5 wt%, more particularly 0.8 wt% to 1.3 wt%, of the conductive material, based on the weight of the second positive electrode active material layer. When the content of the conductive material in the first and second positive electrode active material layers satisfies the above ranges, the electrical conductivity of the positive electrode can be improved by securing a positive electrode conductive network.

Furthermore, in a preferred embodiment of the present invention, the ratio (C2/C1) of the wt% C2 of the conductive material contained in the second positive electrode active material layer to the wt% C1 of the conductive material contained in the first positive electrode active material layer can be from 0.1 to 3, preferably from 0.5 to 2, and even more preferably from 0.5 to 1. When the wt% of the conductive material included in the first positive electrode active material layer in contact with the current collector is equal to or greater than the wt% of the conductive material included in the second positive electrode active material layer, it has the effect of further improving the interfacial adhesion between the first positive electrode active material layer and the current collector by alleviating the phenomenon of migration of the conductive material in the first positive electrode active material layer.

The positive electrode may be manufactured according to conventional positive electrode manufacturing methods, except for utilizing the positive electrode active material described above. Specifically, the positive electrode may be manufactured by preparing a positive electrode slurry for a first positive electrode active material layer and a positive electrode slurry for a second positive electrode active material layer including the positive electrode active material, a conductive material, and a binder, and then applying the positive electrode slurry to the positive electrode current collector using a dual slot die, drying, and rolling.

Alternatively, the positive electrode may be prepared by casting the positive electrode slurry composition onto a separate support, and then laminating the film obtained by peeling from this support onto the positive electrode current collector.

The slurry for the positive electrode for the first positive electrode active material layer and the slurry for the positive electrode for the second positive electrode active material layer according to one embodiment of the present invention may have a viscosity measured at 25°C and a shear rate of 2.5/s, respectively, of 5,000 cps to 25,000 cps, more particularly 6,000 cps to 24,000 cps, and more particularly 6,500 cps to 23,000 cps. The positive electrode slurry having a viscosity value within the above range may have good storage stability and coating processability.

The positive electrode according to one embodiment of the invention is a high-loading positive electrode, wherein the sum of the loading amounts of the first positive electrode active material layer and the second positive electrode active material layer ranges from 400 mg/25 cm² to 700 mg/25 cm², more specifically from 500 mg/25 cm² to 650 mg/25 cm², and more specifically from 550 mg/25 cm² to 650 mg/25 cm². Here, the loading amount is the loading amount measured based on the first and second positive electrode active material layers laminated on one side of the current collector, and the range is doubled when the positive electrode active material layers are formed on both sides of the current collector.

The positive electrode according to one embodiment of the present invention can have excellent positive electrode adhesion and flexibility with a low binder content compared to conventional single-layer positive electrode. As a result, a high-loading positive electrode can be manufactured, the cell resistance of the secondary battery can be reduced by preventing deintercalation of the positive electrode, the capacity and output characteristics of the battery can be improved, and defects in the manufacturing process can be reduced.

The positive electrode of the present invention has an adhesion between the positive electrode current collector and the positive electrode active material layer measured by a 90° peel test that is at least 22 gf/20mm, more specifically in the range of 23 gf/20mm to 80 gf/20mm, and more specifically in the range of 35 to 65 gf/20mm.

Furthermore, the positive electrode of the present invention has a flexibility such that, in a flexibility test in which a cross-section of the positive electrode is lifted after contacting a phi-specific measuring rod on the positive electrode active material layer, a crack occurs in a measuring rod of 5 phi or less, more particularly 4 phi or less, and more particularly 1.5 phi to 3.5 phi.

### Lithium secondary battery

Next, a lithium secondary battery according to the present invention will be described.

A lithium secondary battery according to one embodiment of the present invention may include a positive electrode, a negative electrode, a separator interposed between the positive electrode and negative electrode, and an electrolyte.

In the lithium secondary battery, the positive electrode is as previously described. For example, the positive electrode includes: a current collector; a first positive electrode active material layer formed on the current collector; and a second positive electrode active material layer formed on the first positive electrode active material layer, wherein the first positive electrode active material layer and the second positive electrode active material layer each include, respectively, lithium iron phosphate, a fluorine-based binder, a rubber-based binder, and a conductive material, wherein the rubber-based binder includes a first hydrogenated nitrile having a weight average molecular weight (Mw) of from 10,000 g/mol to 100,000 g/mol, and a second hydrogenated nitrile butadiene rubber having a weight average molecular weight (Mw) of 130,000 g/mol or more, wherein the ratio (P2/P1) of the weight P2 of fluorine contained in the second positive electrode active material layer to the weight P1 of fluorine contained in the first positive electrode active material layer is 1 or less, preferably 0.5 to 1.

The positive electrode has been described in detail above, so a repeated description will be omitted.

The negative electrode may be prepared, for example, by preparing a negative electrode-forming composition including a negative electrode active material, a negative electrode binder, and a negative electrode conductive material, and then applying the composition over the negative electrode current collector.

The negative electrode active material is not particularly limited, and generally any compound capable of reversible intercalation and deintercalation of lithium may be used. Specific examples include carbonaceous materials such as synthetic graphite, natural graphite, graphitized carbon fiber, amorphous carbon, and high crystallinity carbon; metallic compounds that can be alloyed with lithium, such as Si, Al, Sn, Pb, Zn, Bi, In, Mg, Ga, Cd, Si alloys, Sn alloys, or Al alloys; or composites including metallic compounds and carbonaceous materials. Low crystallinity carbons include soft carbon and hard carbon, and high crystallinity carbons include natural graphite, kish graphite, and pyrolytic carbon, mesophase pitch based carbon fiber, meso-carbon microbeads, mesophase pitches, and high temperature calcined carbons such as petroleum or coal tar pitch derived cokes. One of these materials alone or a mixture of two or more may be used, and metallic lithium thin films may also be used as the negative electrode active material.

The negative electrode material is used to impart conductivity to the electrode, and can be used without special restriction as long as it has electronic conductivity without causing chemical changes in the battery to be constructed. Specific examples include graphite, such as natural or synthetic graphite; carbon-based materials, such as carbon black, acetylene black, ketjen black, channel black, furnace black, lamp black, thermal black, carbon fiber, and carbon nanotubes; metal powders or metal fibers, such as copper, nickel, aluminum, and silver; conductive whiskers, such as zinc oxide, potassium titanate, and the like; conductive metal oxides, such as titanium oxide; or conductive polymers such as polyphenylene derivatives, and the like, of which one type alone or a mixture of two or more types may be used. The negative electrode conductive material may be typically included in an amount of 1 to 30 wt%, more particularly from 1 to 20 wt%, and more particularly from 1 to 10 wt%, with respect to the total weight of the negative electrode active material layer.

The negative electrode binder serves to enhance the adhesion between the negative electrode active material particles and the adhesion of the negative electrode active material to the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorinated rubber, or various copolymers thereof, any one of which may be used alone or a mixture of two or more. The negative electrode binder may be included in an amount of 1 to 30 wt%, more particularly from 1 to 20 wt%, more particularly from 1 to 10 wt%, based on the total weight of the negative electrode active material layer.

Meanwhile, the negative electrode current collector is not particularly limited as long as it has a high conductivity without causing chemical changes in the battery, and for example, copper, stainless steel, aluminum, nickel, titanium, calcined carbon, and those that are surface treated with carbon, nickel, titanium, silver, etc. on the surface of copper or stainless steel, an aluminum-cadmium alloy, and the like may be used.

In addition, the negative electrode current collector may have a thickness of typically 3 µm to 500 µm, and like the positive electrode current collector, microscopic irregularities may be formed on the surface of the negative electrode current collector to enhance the binding of the negative electrode active material. For example, it can be used in various forms, such as films, sheets, foils, nets, porous materials, foams, non-woven fabrics, etc.

Meanwhile, in the lithium secondary battery, the separator can be used without any particular restriction if it is conventionally used as a separator in a lithium secondary battery, and it is particularly desirable to have a low resistance to ion migration of the electrolyte and an excellent ability to impregnate the electrolyte. Specifically, porous polymeric films, for example, porous polymeric films made of polyolefin-based polymers such as ethylene homopolymers, propylene homopolymers, ethylene/butene copolymers, ethylene/hexene copolymers, and ethylene/methacrylate copolymers, or two or more layered structures thereof, may be used. Also, conventional porous nonwovens, for example, nonwovens made of high melting point glass fibers, polyethylene terephthalate fibers, and the like may be used. In addition, the separator may also be a porous thin film having a pore diameter of 0.01 µm to 10 µm and a thickness of 5 µm to 300 µm.

Meanwhile, in the lithium secondary battery, the electrolyte may include, but is not limited to, organic solvents and lithium salts conventionally used in electrolytes.

The organic solvent can be used without any particular limitation as long as it can serve as a medium in which the ions involved in the electrochemical reaction of the battery can move. Specifically, the organic solvent includes ester-based solvents such as methyl acetate, ethyl acetate, γ-butyrolactone, ε-caprolactone, and the like; ether-based solvents, such as dibutyl ether or tetrahydrofuran; ketone-based solvents, such as cyclohexanone; aromatic hydrocarbon solvents, such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), propylene carbonate (PC), and the like.

Among them, a carbonate-based solvent is preferred, and a mixture of an annular carbonate (e.g., ethylene carbonate or propylene carbonate, etc.) having a high ionic conductivity and high dielectric constant that can increase the charge and discharge performance of the battery and a linear carbonate-based compound (e.g., ethyl methyl carbonate, dimethyl carbonate, or diethyl carbonate, etc.) having a low viscosity is more preferred.

The lithium salt may be used without limitation as long as it is a compound capable of providing lithium ions for use in lithium secondary batteries. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. The lithium salt is preferably included in the electrolyte at a concentration of about 0.6 mol% to 2 mol%.

In addition to the above electrolyte components, the electrolyte may also contain one or more additives, for example, pyridine, triethylphosphite, triethanolamine, cyclic ether, ethylenediamine, n-glyme, hexaphosphate triamide, nitrobenzene derivatives, sulfur, quinone imine dyes, N-substituted oxazolidinones, N,N-substituted imidazolidines, ethylene glycol dialkyl ether, ammonium salts, pyrroles, 2-methoxyethanol, or aluminum trichloride for the purpose of improving the life characteristics of the battery, inhibiting the reduction of the battery capacity, improving the discharge capacity of the battery, etc,. Here, the additives may be included in an amount of 0.1 to 5 wt% based on the total weight of the electrolyte.

The lithium secondary battery of the present invention can be manufactured by placing a separator between the positive electrode and the negative electrode to form an electrode assembly, the electrode assembly being placed in a cylindrical battery case or a prismatic battery case and then injected with an electrolyte. Alternatively, it may be manufactured by stacking the electrode assembly, impregnating it with electrolyte, and sealing the resulting product in a battery case.

In manufacturing the lithium secondary battery of the present invention, the electrode assembly may be dried to remove one or more organic solvents selected from the group consisting of N-methyl-2-pyrrolidone (NMP), acetone, ethanol, propylene carbonate, ethyl methyl carbonate, ethylene carbonate, and dimethyl carbonate used in the manufacture of the positive electrode. If an electrolyte of the same composition as the organic solvent used in the preparation of the positive electrode is used as the electrolyte, the process of drying the electrode assembly may be omitted.

Unlike the lithium secondary battery described above, the lithium secondary battery according to other embodiments of the present invention may be an all-solid-state battery.

The battery case may be any one conventionally used in the art, and there is no limitation on the shape depending on the intended use of the battery, for example, it may be cylindrical, prismatic, pouch-type, or coin-type using a can.

The lithium secondary battery according to the present invention stably exhibits excellent discharge capacity, output characteristics, and capacity retention rate, and is therefore useful in portable devices such as cell phones, notebook computers, and digital cameras, and in energy storage systems (ESS) and electric vehicles such as hybrid electric vehicles (HEV).

The present invention will now be described in more detail by way of examples. However, the following examples are intended to illustrate the present invention and are not intended to limit the scope of the present invention.

### Example 1 to Example 6 and Comparative Example 1 to Comparative Example 5

### (1) Preparation of positive electrode slurry for first positive electrode active material layer

A dispersion including carbon nanotubes (CNTs) as a conductive material and a first hydrogenated nitrile butadiene rubber (first HNBR) with a weight average molecular weight (Mw) of 30,000 g/mol as a rubber-based binder was prepared.

LiFePO₄, which is a primary particle with an average particle diameter D₅₀ of 1.0 µm and having a monolith structure, as lithium iron phosphate, carbon nanotubes (CNTs) as a conductive material, polyvinylidene fluoride (PVdF) with a weight average molecular weight (Mw) of 630,000 g/mol as a fluorine-based binder, and a second hydrogenated nitrile butadiene rubber (second HNBR) with a weight average molecular weight (Mw) of 310,000 g/mol as a rubber-based binder, and the above dispersion were introduced into N-methylpyrrolidone (NMP) solvent, and a positive electrode slurry for a first positive electrode active material layer was prepared by mixing at 2500 rpm for 90 min using a Homo-disperse.

In each of the positive electrode slurry for first positive electrode active material layer of Examples 1 to 6 and Comparative Examples 1 to 5, the weight ratio of lithium iron phosphate, conductive material, fluorine-based binder, first hydrogenated nitrile butadiene rubber, and second hydrogenated nitrile butadiene rubber were adjusted as shown in Table 1 to prepare each of the positive electrode slurry for first positive electrode active material layer.

### (2) Preparation of positive electrode slurry for second positive electrode active material layer

Each of the positive electrode slurry for a second positive electrode active material layer of Examples 1 to 6 and Comparative Examples 1 to 5 was prepared in the same manner as the preparation method of the positive electrode slurry for first positive electrode active material layer, except that the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1.

### (3) Preparation of positive electrode

Using a dual slot die coater, an aluminum foil was coated with a positive electrode slurry for the first positive electrode active material layer at a loading amount of 300 mg/25 cm² and a positive electrode slurry for the second positive electrode active material layer at a loading amount of 300 mg/25 cm², but in such a way that the positive electrode slurry for the second positive electrode active material layer was stacked on the positive electrode slurry for the first positive electrode active material layer.

The positive electrode slurry was then hot air dried at 130°C for 5 minutes so that the solids content was greater than 99.0wt%. The positive electrode was then prepared by rolling the dried positive electrode slurry so that the porosity of the positive electrode active material layer was 29%.

**[Table 1]**

| | | Positiv e electro de active material | Conduc tive materia l | Binder | | | PVDF weight: weight of second HNBR | PVDF weight in second positive electrode active material layer/ PVDF weight in first positive electrode active material layer | Second HNBR wt% in second positive electrode active material layer/ Second HNBR wt% in first positive electrode active material layer |
|---|---|---|---|---|---|---|---|---|---|
| | | Lithiu m iron phosph ate (parts by weight) | Carbon nanotu bes (parts by weight) | PVdF (parts by weig ht) | First HNBR (parts by weight) | SecondH NBR (parts by weight) | | | |
| Exam ple 1 | Second positive electrode active material layer | 96.44 | 1.2 | 1.4 | 0.36 | 0.6 | 7:3 | 0.64 | 1.2 |
| | First positive electrode active material layer | 96.26 | 0.8 | 2.2 | 0.24 | 0.5 | 81.5:18.5 | | |
| Exam ple 2 | Second positive electrode active material layer | 95.99 | 1.2 | 1.8 | 0.36 | 0.65 | 73.5:26.5 | 0.82 | 1.3 |
| | First positive electrode active material layer | 95.74 | 1.2 | 2.2 | 0.36 | 0.5 | 81.5:18.5 | | |
| Exam ple 3 | Second positive electrode active material layer | 96.4 | 1.0 | 1.5 | 0.3 | 0.8 | 65.2:34.8 | 0.68 | 2.67 |
| | First positive electrode active material layer | 96.72 | 0.6 | 2.2 | 0.18 | 0.3 | 88:12 | | |
| Exam ple 4 | Second positive electrode active material layer | 96.3 | 1.0 | 1.8 | 0.3 | 0.6 | 75:25 | 0.82 | 2.0 |
| | First positive electrode active material layer | 96.72 | 0.6 | 2.2 | 0.18 | 0.3 | 88:12 | | |
| Exam ple 5 | Second positive electrode active material layer | 96.3 | 1.0 | 1.8 | 0.3 | 0.6 | 75:25 | 1.0 | 1.2 |
| | First positive electrode active material layer | 96.92 | 0.6 | 1.8 | 0.18 | 0.5 | 78.3:21.7 | | |
| Exam ple 6 | Second positive electrode active material layer | 97.32 | 0.6 | 1.4 | 0.18 | 0.5 | 73.7: 26.3 | 0.54 | 1.0 |
| | First positive electrode active material layer | 95.6 | 1.0 | 2.6 | 0.3 | 0.5 | 83.9:16.1 | | |
| Comp arativ e Exam ple 1 | Second positive electrode active material layer | 96.26 | 0.8 | 2.2 | 0.24 | 0.5 | 81.5:18.5 | 1.57 | 0.83 |
| | First positive electrode active material layer | 96.44 | 1.2 | 1.4 | 0.36 | 0.6 | 7:3 | | |
| Comp arativ e Exam ple 2 | Second positive electrode active material layer | 96.44 | 1.2 | 2.0 | 0.36 | 0 | - | 0.74 | - |
| | First positive electrode active material layer | 96.26 | 0.8 | 2.7 | 0.24 | 0 | - | | |
| Comp arativ e Exam ple 3 | Second positive electrode active material layer | 96.8 | 1.2 | 1.4 | 0 | 0.6 | 7:3 | 0.64 | 1.2 |
| | First positive electrode active material layer | 96.5 | 0.8 | 2.2 | 0 | 0.5 | 81.5:18.5 | | |
| Comp arativ e Exam ple 4 | Second positive electrode active material layer | 95.94 | 1.2 | 1.4 | 0.36 | 1.1 | 56:44 | 0.64 | 11 |
| | First positive electrode active material layer | 96.66 | 0.8 | 2.2 | 0.24 | 0.1 | 96:4 | | |
| Comp arativ e Exam ple 5 | Second positive electrode active material layer | 96.55 | 1.2 | 1.8 | 0.36 | 0.09 | 95:5 | 0.82 | 0.10 |
| | First positive electrode active material layer | 95.33 | 1.2 | 2.2 | 0.36 | 0.91 | 71:29 | | |

| | | | | | | | | | |
|---|---|---|---|---|---|---|---|---|---|
| **HNBR above is hydrogenated nitrile butadiene rubber. | | | | | | | | | |

### Experimental Example 1: Measuring the weight of fluorine

After scraping off the first positive electrode active material layer and the second positive electrode active material layer according to the Examples and Comparative Examples, respectively, and taking a sample of 100 mg each, the weight of fluorine contained in each sample was measured using the combustion reaction method, and the ratio (P2/P1) of the weight P2 of fluorine contained in the second positive electrode active material layer to the weight P1 of fluorine contained in the first positive electrode active material layer was calculated, and the results are shown in Table 2.

To determine the weight of fluorine contained in each sample, the gas generated by complete combustion of the sample of the first positive electrode active material layer and the sample of the second positive electrode active material layer under high pressure oxygen conditions (40 atm) was captured in an absorbent solution. The gas capture absorbent solution was a 1 L solution containing 2.52 g NaHCO₃ and 2.52 g Na₂CO₃, and when fluoride ions were absorbed or dissolved in the gas capture absorbent solution, the fluorine weight of each sample was determined using ion chromatography. The ion chromatography column and analytical conditions were as follows.
Ion Chromatography: ICS-3000
Column: IonPac AS18 (4 × 250 mm)
Detector: suppressed conductivity detector
SRS current: 76Ma
Injection volume: 20uL
The same test was repeated three times to represent the average.

Based on the results of the ion chromatography analysis, the ratio (P2/P1) of the weight P2 of fluorine contained in the second positive electrode active material layer to the weight P1 of fluorine contained in the first positive electrode active material layer is shown in Table 2.

### Experimental Example 2: Testing the adhesion of the positive electrode

After vacuum drying each of the positive electrodes prepared in Examples and Comparative Examples at a temperature of 130°C for 2 hours, the adhesion between the positive electrode active material layer and the positive electrode current collector was measured, and the results are shown in Table 2.

Specifically, the positive electrodes prepared in each of Examples and Comparative Examples were cut to a length of 150 mm and a width of 20 mm, and the surface of the positive electrode was attached to a slide glass with a length of 75 mm and a width of 25 mm in the longitudinal direction using double-sided tape. That is, the slide glass was attached to an area corresponding to half of the longitudinal direction of the positive electrode. Then, the evaluation sample was prepared by rubbing the roller 10 times to ensure that the double-sided tape was applied uniformly.

Next, the slide glass portion of the evaluation sample was fixed to a sample stage of a Universal Testing Machine (UTM) (Product name: LS5, manufacturer: LLOYD), and the positive electrode half without the slide glass attached was connected to a load cell of the UTM machine. The load cell was moved at a speed of 100 mm/min, with a force of 90°, to 50 mm, and the load applied to the load cell was measured. The load applied to the load cell was then averaged over the 20 mm to 40 mm section of the run, which was repeated five times to evaluate the average value as the positive electrode adhesion (gf/20 mm) of each sample.

### Experimental Example 3: Testing the flexibility of the positive electrode

The positive electrodes prepared in each of Examples and Comparative Examples were vacuum dried for 2 hours at a temperature of 130°C, and their flexibility was measured, and the results are shown in Table 2.

Specifically, each positive electrode prepared in Examples 1 to 6 and Comparative Examples 1 to 5 was cut to a length of 10 cm and a width of 30 cm, and a measuring rod having a diameter of 2.5 ø, 3 ø, 4 ø, 5 ø, 6 ø, 7 ø, 8 ø, 9 ø, 10 ø was prepared, and with the positive electrode current collector side of each cut positive electrode facing the measuring rod, each cut positive electrode was bent in half, and both ends of the positive electrode were lifted at a speed of 10 mm per minute. They were lifted until the force measured by the UTM was 5 N. They were measured by each phi and the electrode was observed through an optical microscope for cracks, and if there were no cracks, the test was proceeded with a smaller phi. Accordingly, the diameter (ø) of the measuring rod that cracks occur is shown in Table 2.

### Experimental Example 4: Viscosity of positive electrode slurry for first and second positive electrode active material layers

The viscosity of the positive electrode slurry for the first positive electrode active material layer and the viscosity of the positive electrode slurry for the second positive electrode active material layer prepared in each of the Examples and Comparative Examples were measured, and the results are shown in Table 2.

Specifically, the positive electrode slurry for the first positive electrode active material layer and the positive electrode slurry for the second positive electrode active material layer were each cooled for 1 hour at room temperature and 1% relative humidity, and then the viscosity of the positive electrode slurry was measured using a viscometer (Brookfield) at a shear rate of 2.5/s at 25°C. The viscosity measurements were performed within 2 hours after preparation of the positive electrode slurry for the first positive electrode active material layer and the positive electrode slurry for the second positive electrode active material layer, including the cooling time.

**[Table 2]**

| | Viscosity of positive electrode slurry (cps) | | P2/P1 | Adhesion (gf/20mm) | Flexibility (ø) |
|---|---|---|---|---|---|
| Example 1 | Second positive electrode slurry | 14700 | 0.64 | 39 | 2.5 |
| | First positive electrode slurry | 11900 | | | |
| Example 2 | Second positive electrode slurry | 14300 | 0.82 | 56 | 2.5 |
| | First positive electrode slurry | 14500 | | | |
| Example 3 | Second positive electrode slurry | 12200 | 0.68 | 38 | 2.5 |
| | First positive electrode slurry | 11100 | | | |
| Example 4 | Second positive electrode slurry | 9700 | 0.82 | 41 | 3 |
| | First positive electrode slurry | 11100 | | | |
| Example 5 | Second positive electrode slurry | 9700 | 1 | 24 | 3 |
| | First positive electrode slurry | 14800 | | | |
| Example 6 | Second positive electrode slurry | 12300 | 0.54 | 65 | 2.5 |
| | First positive electrode slurry | 12900 | | | |
| Comparative Example 1 | Second positive electrode slurry | 11900 | 1.57 | 12.6 | 3 |
| | First positive electrode slurry | 14700 | | | |
| Comparative Example 2 | Second positive electrode slurry | 9100 | 0.74 | 44 | greater than 10 |
| | First positive electrode slurry | 10700 | | | |
| Comparative Example 3 | Second positive electrode slurry | - | - | - | - |
| | First positive electrode slurry | - | | | |
| Comparative Example 4 | Second positive electrode slurry | 52200 | - | - | - |
| | First positive electrode slurry | 13100 | | | |
| Comparative Example 5 | Second positive electrode slurry | 8400 | - | - | - |
| | First positive electrode slurry | 38300 | | | |

Referring to Table 2, a positive electrode according to Comparative Example 1 in which the ratio (P2/P1) of the weight P2 of fluorine contained in the second positive electrode active material layer to the weight P1 of fluorine contained in the first positive electrode active material layer exceeds 1, has inferior adhesion compared to a positive electrode according to any of the Examples.

The positive electrode according to Comparative Example 2 does not include a second hydrogenated nitrile butadiene rubber, so the flexibility of the positive electrode is inferior compared to the positive electrode according to the Examples.

In the positive electrode according to Comparative Example 3, since the positive electrode slurry for the first and second positive electrode active material layers does not include the first hydrogenated nitrile butadiene rubber, it was not possible to manufacture a positive electrode using a dual-slot die coater due to severe agglomeration of the lithium iron phosphate and the conductive material contained in the slurry.

In the positive electrode according to Comparative Example 4, the viscosity of the positive electrode slurry for the second positive electrode active material layer was too high, and the positive electrode could not be manufactured using a dual slot die coater because the coating performance was degraded, and in the positive electrode according to Comparative Example 5, the viscosity of the positive electrode slurry for the first positive electrode active material layer was too high, so the positive electrode could not be manufactured.

As described above, the positive electrode according to the present invention includes first and second positive electrode active material layers, wherein the first and second positive electrode active material layers each include a fluorine-based binder, a first hydrogenated nitrile butadiene rubber, a second hydrogenated nitrile butadiene rubber, and a conductive material in a predetermined weight ratio, thereby securing a loading amount of 550 mg/25 cm² to 750 mg/25 cm², while having excellent positive electrode adhesion and flexibility. As a result, it is possible to manufacture a high-loading positive electrode, reduce the cell resistance of the secondary battery by preventing positive electrode deintercalation, improve the capacity and output characteristics of the battery, and reduce defects in the manufacturing process.

## Claims

1. A positive electrode comprising:
a current collector;
a first positive electrode active material layer disposed on the current collector; and
a second positive electrode active material layer disposed on the first positive electrode active material layer,
wherein the first positive electrode active material layer and the second positive electrode active material layer each include a lithium iron phosphate, a fluorine-based binder, a rubber-based binder, and a conductive material,
wherein the rubber-based binder comprises a first hydrogenated nitrile butadiene rubber and a second hydrogenated nitrile butadiene rubber, wherein the first hydrogenated nitrile butadiene rubber has a weight average molecular weight (Mw) in a range of 10,000 g/mol to 100,000 g/mol, and wherein the second hydrogenated nitrile butadiene rubber has a weight average molecular weight (Mw) of 130,000 g/mol or more, preferably in a range of 150,000 g/mol to 1,000,000 g/mol, wherein the Mw is measured according to the disclosure as filed, and
wherein a ratio (P2/P1) of a weight P2 of fluorine contained in the second positive electrode active material layer to a weight P1 of fluorine contained in the first positive electrode active material layer is less than or equal to 1.

2. The positive electrode of claim 1, wherein
the ratio (P2/P1) is in a range of 0.5 to 1.

3. The positive electrode of claim 1, wherein
the second hydrogenated nitrile butadiene rubber of the first positive electrode active material layer is present in an amount 0.9 wt% or less based on a weight of the first positive electrode active material layer.

4. The positive electrode of claim 1, wherein
a weight ratio of the fluorine-based binder included in the first positive electrode active material layer to the second hydrogenated nitrile butadiene rubber included in the first positive electrode active material layer is in a range of 90: 10 to 75:25, and
a weight ratio of the fluorine-based binder included in the second positive electrode active material layer to the second hydrogenated nitrile butadiene rubber included in the second positive electrode active material layer is in a range of 80:20 to 60:40.

5. The positive electrode of claim 1, wherein
the first positive electrode active material layer, based on a weight of the first positive electrode active material layer, comprises
the lithium iron phosphate in a range of 93.5 to 97.99 wt%;
the fluorine-based binder in a range of 1.5 to 3.0 wt%;
the first hydrogenated nitrile butadiene rubber in a range of 0.01 to 0.7 wt.%;
the second hydrogenated nitrile butadiene rubber in a range of 0.2 to 0.8 wt%;
the conductive material in a range of 0 3 to 2.0 wt%.

6. The positive electrode of claim 1, wherein
the second positive electrode active material layer, based on a weight of the second positive electrode active material layer, comprises:
the lithium iron phosphate in a range of 94.2 to 98.49 wt%;
the fluorine-based binder in a range of 0.9 to 2.2 wt%;
the first hydrogenated nitrile butadiene rubber in a range of 0.01 to 0.7 wt.%;
the second hydrogenated nitrile butadiene rubber in a range of 0.3 to 0.9 wt%;
the conductive material in a range of 0.3 to 2.0 wt%.

7. The positive electrode of claim 1, wherein
the fluorine-based binder included in the first positive electrode active material layer and the fluorine-based binder included in the second positive electrode active material layer are a same compound.

8. The positive electrode of claim 1, wherein
a ratio (H2/H1) of a weight percent (H2) of the second hydrogenated nitrile butadiene rubber included in the second positive electrode active material layer to a weight percent (H1) of the second hydrogenated nitrile butadiene rubber included in the first positive electrode active material layer is in a range of 1 to 3.

9. The positive electrode of claim 1, wherein
the lithium iron phosphate is represented by the Chemical Formula 1:
[Chemical Formula 1] Li₁₊ₐFe₁₋ₓMₓ(PO_{4-b})X_{b}
(M is at least one element selected from the group consisting of Al, Mg, Ni, Co, Mn, Ti, Ga, Cu, V, Nb, Zr, Ce, In, Zn, and Y; X is at least one element selected from the group consisting of F, S, and N, and
wherein a, b, and x are -0.5≤a≤0.5, 0≤b≤0.1, and 0≤x≤0.5).

10. The positive electrode of claim 1, wherein
the conductive material is a carbon nanotube.

11. The positive electrode of claim 1, wherein
a ratio (C2/C1) of a weight percent C2 of the conductive material included in the second positive electrode active layer to a weight percent C1 of the conductive material included in the first positive electrode active layer is in a range of 0.5 to 2.

12. The positive electrode of claim 1, wherein
a sum of a loading amount of the first positive electrode active material layer and a loading amount of the second positive electrode active material layer is in a range of 400 mg/25 cm² to 700 mg/25 cm².

13. The positive electrode of claim 1, wherein
a positive electrode adhesion is greater than or equal to 22 gf/20 mm,
wherein the positive electrode adhesion is measured in an adhesion test in which the first positive electrode active material layer is exfoliated at 90° from an aluminum thin film.

14. The positive electrode of claim 1, wherein
a flexibility of the positive electrode is determined in a flexibility test in which a phi-specific measuring rod contacts a positive electrode active material layer and a cross-section of the positive electrode is lifted, such that cracks occur in the phi-specific measuring rods in a range of 5 phi (ø) or less.

15. A lithium secondary battery comprising a positive electrode according to any one of claims 1 to 14.

## Patentansprüche

1. Positive Elektrode, umfassend:
einen Stromsammler;
eine erste Schicht aus positivem Elektrodenaktivmaterial, die auf dem Stromsammler angeordnet ist; und
eine zweite Schicht aus positivem Elektrodenaktivmaterial, die auf der ersten Schicht aus positivem Elektrodenaktivmaterial angeordnet ist,
wobei die erste Schicht aus positivem Elektrodenaktivmaterial und die zweite Schicht aus positivem Elektrodenaktivmaterial jeweils ein Lithiumeisenphosphat, ein fluorbasiertes Bindemittel, ein kautschukbasiertes Bindemittel und ein leitfähiges Material enthalten,
wobei das kautschukbasierte Bindemittel einen ersten hydrierten Nitril-Butadien-Kautschuk und einen zweiten hydrierten Nitril-Butadien-Kautschuk umfasst, wobei der erste hydrierte Nitril-Butadien-Kautschuk ein gewichtsmittleres Molekulargewicht (Mw) in einem Bereich von 10.000 g/mol bis 100.000 g/mol aufweist, und wobei der zweite hydrierte Nitril-Butadien-Kautschuk ein gewichtsmittleres Molekulargewicht (Mw) von 130.000 g/mol oder mehr, vorzugsweise in einem Bereich von 150.000 g/mol bis 1.000.000 g/mol, aufweist, wobei das Mw gemäß der wie eingereichten Offenbarung gemessen wird, und
wobei ein Verhältnis (P2/P1) eines Gewichts P2 von in der zweiten Schicht aus positivem Elektrodenaktivmaterial enthaltenem Fluor zu einem Gewicht P1 von in der ersten Schicht aus positivem Elektrodenaktivmaterial enthaltenem Fluor kleiner als oder gleich 1 ist.

2. Positive Elektrode nach Anspruch 1, wobei
das Verhältnis (P2/P1) in einem Bereich von 0,5 bis 1 liegt.

3. Positive Elektrode nach Anspruch 1, wobei
der zweite hydrierte Nitril-Butadien-Kautschuk der ersten Schicht aus positivem Elektrodenaktivmaterial in einer Menge von 0,9 Gew.-% oder weniger, bezogen auf ein Gewicht der ersten Schicht aus positivem Elektrodenaktivmaterial, vorhanden ist.

4. Positive Elektrode nach Anspruch 1, wobei
ein Gewichtsverhältnis des in der ersten Schicht aus positivem Elektrodenaktivmaterial enthaltenen fluorbasierten Bindemittels zu dem in der ersten Schicht aus positivem Elektrodenaktivmaterial enthaltenen zweiten hydrierten Nitril-Butadien-Kautschuk in einem Bereich von 90:10 bis 75:25 liegt, und
ein Gewichtsverhältnis des in der zweiten Schicht aus positivem Elektrodenaktivmaterial enthaltenen fluorbasierten Bindemittels zu dem in der zweiten Schicht aus positivem Elektrodenaktivmaterial enthaltenen zweiten hydrierten Nitril-Butadien-Kautschuk in einem Bereich von 80:20 bis 60:40 liegt.

5. Positive Elektrode nach Anspruch 1, wobei
die erste Schicht aus positivem Elektrodenaktivmaterial, bezogen auf ein Gewicht der ersten Schicht aus positivem Elektrodenaktivmaterial, umfasst:
das Lithiumeisenphosphat in einem Bereich von 93,5 bis 97,99 Gew.-%;
das fluorbasierte Bindemittel in einem Bereich von 1,5 bis 3,0 Gew.-%;
den ersten hydrierten Nitril-Butadien-Kautschuk in einem Bereich von 0,01 bis 0,7 Gew.- %;
den zweiten hydrierten Nitril-Butadien-Kautschuk in einem Bereich von 0,2 bis 0,8 Gew.- %;
das leitfähige Material in einem Bereich von 0,3 bis 2,0 Gew.-%.

6. Positive Elektrode nach Anspruch 1, wobei
die zweite Schicht aus positivem Elektrodenaktivmaterial, bezogen auf ein Gewicht der zweiten Schicht aus positivem Elektrodenaktivmaterial, umfasst:
das Lithiumeisenphosphat in einem Bereich von 94,2 bis 98,49 Gew.-%;
das fluorbasierte Bindemittel in einem Bereich von 0,9 bis 2,2 Gew.-%;
den ersten hydrierten Nitril-Butadien-Kautschuk in einem Bereich von 0,01 bis 0,7 Gew.- %;
den zweiten hydrierten Nitril-Butadien-Kautschuk in einem Bereich von 0,3 bis 0,9 Gew.- %;
das leitfähige Material in einem Bereich von 0,3 bis 2,0 Gew.-%.

7. Positive Elektrode nach Anspruch 1, wobei das in der ersten Schicht aus positivem Elektrodenaktivmaterial enthaltene fluorbasierte Bindemittel und das in der zweiten Schicht aus positivem Elektrodenaktivmaterial enthaltene fluorbasierte Bindemittel eine gleiche Verbindung sind.

8. Positive Elektrode nach Anspruch 1, wobei
ein Verhältnis (H2/H1) eines Gewichtsprozents (H2) des in der zweiten Schicht aus positivem Elektrodenaktivmaterial enthaltenen zweiten hydrierten Nitril-Butadien-Kautschuks zu einem Gewichtsprozent (H1) des in der ersten Schicht aus positivem Elektrodenaktivmaterial enthaltenen zweiten hydrierten Nitril-Butadien-Kautschuks in einem Bereich von 1 bis 3 liegt.

9. Positive Elektrode nach Anspruch 1, wobei
das Lithiumeisenphosphat durch die chemische Formel 1 dargestellt ist:
[Chemische Formel 1] Li₁₊ₐFe₁₋ₓMₓ(PO_{4-b})X_{b}
(M ist mindestens ein Element, ausgewählt aus der Gruppe bestehend aus Al, Mg, Ni, Co, Mn, Ti, Ga, Cu, V, Nb, Zr, Ce, In, Zn und Y; X ist mindestens ein Element, ausgewählt aus der Gruppe bestehend aus F, S und N, und
wobei a, b und x -0,5 ≤ *a* ≤ 0,5, 0 < *b* ≤ 0,1 und 0 ≤ *x* ≤ 0,5 sind).

10. Positive Elektrode nach Anspruch 1, wobei
das leitfähige Material ein Kohlenstoff-Nanoröhrchen ist.

11. Positive Elektrode nach Anspruch 1, wobei
ein Verhältnis (C2/C1) eines Gewichtsprozents C2 des in der zweiten Schicht aus positivem Elektrodenaktivmaterial enthaltenen leitfähigen Materials zu einem Gewichtsprozent C1 des in der ersten Schicht aus positivem Elektrodenaktivmaterial enthaltenen leitfähigen Materials in einem Bereich von 0,5 bis 2 liegt.

12. Positive Elektrode nach Anspruch 1, wobei
eine Summe einer Beladungsmenge der ersten Schicht aus positivem Elektrodenaktivmaterial und einer Beladungsmenge der zweiten Schicht aus positivem Elektrodenaktivmaterial in einem Bereich von 400 mg/25 cm² bis 700 mg/25 cm² liegt.

13. Positive Elektrode nach Anspruch 1, wobei
eine Haftung der positiven Elektrode größer als oder gleich 22 gf/20 mm ist,
wobei die Haftung der positiven Elektrode in einem Haftungstest gemessen wird, bei dem die erste Schicht aus positivem Elektrodenaktivmaterial bei 90° von einer dünnen Aluminiumfolie abgezogen wird.

14. Positive Elektrode nach Anspruch 1, wobei
eine Flexibilität der positiven Elektrode in einem Flexibilitätstest bestimmt wird, bei dem ein phi-spezifischer Messstab eine Schicht aus positivem Elektrodenaktivmaterial berührt und ein Querschnitt der positiven Elektrode angehoben wird, sodass Risse in den phi-spezifischen Messstäben in einem Bereich von 5 phi (ø) oder weniger auftreten.

15. Lithium-Sekundärbatterie, umfassend eine positive Elektrode nach einem der Ansprüche 1 bis 14.

## Revendications

1. Électrode positive comprenant :
un collecteur de courant ;
une première couche de matériau actif d'électrode positive disposée sur le collecteur de courant ; et
une seconde couche de matériau actif d'électrode positive disposée sur la première couche de matériau actif d'électrode positive,
dans laquelle la première couche de matériau actif d'électrode positive et la seconde couche de matériau actif d'électrode positive comprennent chacune un phosphate de fer et de lithium, un liant à base de fluor, un liant à base de caoutchouc et un matériau conducteur,
dans laquelle le liant à base de caoutchouc comprend un premier caoutchouc nitrile butadiène hydrogéné et un second caoutchouc nitrile butadiène hydrogéné, dans laquelle le premier caoutchouc nitrile butadiène hydrogéné a une masse moléculaire moyenne en masse (Mw) dans une plage de 10 000 g/mol à 100 000 g/mol, et dans laquelle le second caoutchouc nitrile butadiène hydrogéné a une masse moléculaire moyenne en masse (Mw) de 130 000 g/mol ou plus, de préférence dans une plage de 150 000 g/mol à 1 000 000 g/mol, dans laquelle le Mw est mesuré selon la description telle que déposée, et
dans laquelle un rapport (P2/P1) d'un poids P2 de fluor contenu dans la seconde couche de matériau actif d'électrode positive sur un poids P1 de fluor contenu dans la première couche de matériau actif d'électrode positive est inférieur ou égal à 1.

2. L'électrode positive de la revendication 1, dans laquelle le rapport (P2/P1) est dans une plage de 0,5 à 1.

3. L'électrode positive de la revendication 1, dans laquelle
le second caoutchouc nitrile butadiène hydrogéné de la première couche de matériau actif d'électrode positive est présent en une quantité inférieure ou égale à 0,9 % en poids sur la base d'un poids de la première couche de matériau actif d'électrode positive.

4. L'électrode positive de la revendication 1, dans laquelle
un rapport massique du liant à base de fluor inclus dans la première couche de matériau actif d'électrode positive sur le second caoutchouc nitrile butadiène hydrogéné inclus dans la première couche de matériau actif d'électrode positive est dans une plage de 90:10 à 75:25, et
un rapport massique du liant à base de fluor inclus dans la seconde couche de matériau actif d'électrode positive sur le second caoutchouc nitrile butadiène hydrogéné inclus dans la seconde couche de matériau actif d'électrode positive est dans une plage de 80:20 à 60:40.

5. L'électrode positive de la revendication 1, dans laquelle
la première couche de matériau actif d'électrode positive, sur la base d'un poids de la première couche de matériau actif d'électrode positive, comprend le phosphate de fer et de lithium dans une plage de 93,5 à 97,99 % en poids ;
le liant à base de fluor dans une plage de 1,5 à 3,0 % en poids ;
le premier caoutchouc nitrile butadiène hydrogéné dans une plage de 0,01 à 0,7 % en poids ;
le second caoutchouc nitrile butadiène hydrogéné dans une plage de 0,2 à 0,8 % en poids ;
le matériau conducteur dans une plage de 0,3 à 2,0 % en poids.

6. L'électrode positive de la revendication 1, dans laquelle
la seconde couche de matériau actif d'électrode positive, sur la base d'un poids de la seconde couche de matériau actif d'électrode positive, comprend :
le phosphate de fer et de lithium dans une plage de 94,2 à 98,49 % en poids ;
le liant à base de fluor dans une plage de 0,9 à 2,2 % en poids ;
le premier caoutchouc nitrile butadiène hydrogéné dans une plage de 0,01 à 0,7 % en poids ;
le second caoutchouc nitrile butadiène hydrogéné dans une plage de 0,3 à 0,9 % en poids ;
le matériau conducteur dans une plage de 0,3 à 2,0 % en poids.

7. L'électrode positive de la revendication 1, dans laquelle
le liant à base de fluor inclus dans la première couche de matériau actif d'électrode positive et le liant à base de fluor inclus dans la seconde couche de matériau actif d'électrode positive sont un même composé.

8. L'électrode positive de la revendication 1, dans laquelle
un rapport (H2/H1) d'un pourcentage en poids (H2) du second caoutchouc nitrile butadiène hydrogéné inclus dans la seconde couche de matériau actif d'électrode positive sur un pourcentage en poids (H1) du second caoutchouc nitrile butadiène hydrogéné inclus dans la première couche de matériau actif d'électrode positive est dans une plage de 1 à 3.

9. L'électrode positive de la revendication 1, dans laquelle
le phosphate de fer et de lithium est représenté par la Formule Chimique 1 :
[Formule Chimique 1] Li₁₊ₐFe₁₋ₓMₓ(PO_{4-b})X_{b}
(M est au moins un élément choisi dans le groupe constitué par Al, Mg, Ni, Co, Mn, Ti, Ga, Cu, V, Nb, Zr, Ce, In, Zn, et Y ; X est au moins un élément choisi dans le groupe constitué par F, S, et N, et
dans laquelle a, b, et x sont -0.5 ≤ *a* ≤ 0.5, 0 < *b* ≤ 0.1, et 0 ≤ *x* ≤ 0.5).

10. L'électrode positive de la revendication 1, dans laquelle le matériau conducteur est un nanotube de carbone.

11. L'électrode positive de la revendication 1, dans laquelle
un rapport (C2/C1) d'un pourcentage en poids C2 du matériau conducteur inclus dans la seconde couche de matériau actif d'électrode positive sur un pourcentage en poids C1 du matériau conducteur inclus dans la première couche de matériau actif d'électrode positive est dans une plage de 0,5 à 2.

12. L'électrode positive de la revendication 1, dans laquelle
une somme d'une quantité de charge de la première couche de matériau actif d'électrode positive et d'une quantité de charge de la seconde couche de matériau actif d'électrode positive est dans une plage de 400 mg/25 cm² à 700 mg/25 cm².

13. L'électrode positive de la revendication 1, dans laquelle
une adhérence de l'électrode positive est supérieure ou égale à 22 gf/20 mm,
dans laquelle l'adhérence de l'électrode positive est mesurée dans un test d'adhérence dans lequel la première couche de matériau actif d'électrode positive est exfoliée à 90° d'un film mince d'aluminium.

14. L'électrode positive de la revendication 1, dans laquelle
une flexibilité de l'électrode positive est déterminée dans un test de flexibilité dans lequel une tige de mesure ayant un phi spécifique entre en contact avec une couche de matériau actif d'électrode positive et une section transversale de l'électrode positive est soulevée, de sorte que des fissures apparaissent pour les tiges de mesure ayant un phi spécifique dans une plage de 5 phi (ø) ou moins.

15. Batterie secondaire au lithium comprenant une électrode positive selon l'une quelconque des revendications 1 à 14.
